# EUROPÄISCHE PATENTSCHRIFT

(11) **EP 4 116 602 B1**
(45) Veröffentlichungstag und Bekanntmachung des Hinweises auf die Patenterteilung: **04.03.2026**
(21) Anmeldenummer: 22177998.6
(22) Anmeldetag: 09.06.2022
(51) Int. Cl.: F16G 1/28, F16G 1/10, F16G 1/12

(54) **RIEMEN MIT ANTISTATISCHEN EIGENSCHAFTEN**
STRAP WITH ANTISTATIC PROPERTIES
COURROIE À DES PROPRIÉTÉS ANTISTATIQUES

(30) Priorität: 05.07.2021 DE 102021207025
(43) Veröffentlichungstag der Anmeldung: 11.01.2023
(73) Patentinhaber: ContiTech Deutschland GmbH, 30175 Hannover (DE)
(72) Erfinder: Quass, Jan-Henning, 30165 Hannover (DE); Brocke, Stephan, 30165 Hannover (DE); Göser, Hubert, 30165 Hannover (DE); Kucharczyk, Andre, 30165 Hannover (DE)
(74) Vertreter: Preusser, Andrea

(56) Entgegenhaltungen:
- EP-A1- 3 670 960
- DE-A1- 102011 121 656
- DE-A1- 102014 008 622
- US-A1- 2017 299 017
- US-B1- 6 770 004

## Beschreibung

Die Erfindung betrifft einen Riemen mit einer Antriebsseite und einer der Antriebsseite gegenüberliegenden Rückenseite, umfassend einen Riemenkörper, wobei der Riemenkörper ein elektrisch leitfähiges polymeres Material aufweist. In dem Riemenkörper sind in einer Längsrichtung eine Mehrzahl von Zugträgern angeordnet und von dem polymeren Material des Riemenkörpers umschlossen, wobei der Riemen auf einer Antriebsseite eine Beschichtung aufweist, die einen festen Haftverbund mit dem Riemenkörper bildet. Die Beschichtung weist eine elektrisch leitfähige Folienschicht und eine zwischen dem Riemenkörper und der Folienschicht angeordnete Gewebeschicht auf, wobei die Gewebeschicht Freiräume aufweist, wobei die Gewebeschicht elektrisch isolierend ausgebildet ist, die Gewebeschicht zumindest teilweise von dem elektrisch leitfähigen polymeren Material gefüllt ist, sodass der Riemen eine von der Antriebsseite zur Rückenseite des Riemens durchgängige elektrische Leitfähigkeit aufweist.

### Stand der Technik

In der Antriebstechnik werden auf verschiedenen technischen Gebieten Riemen zur Kraft-übertragung verwendet. Bei der Kraftübertragung z.B. in einem Verbrennungsmotor kann ein Riemen als flexibles, endlos geschlossenes Band ausgebildet sein. Riemen können jedoch auch mit zwei offenen Enden beispielsweise bei Aufzugssystemen eingesetzt werden, um eine Aufzugskabine in der Höhe zu bewegen.

Derartige Riemen werden heutzutage üblicherweise aus einem flexiblen Material wie z.B. aus einem elastomeren Material oder aus einem thermoplastischen Material wie z.B. aus Polyurethan (kurz: PU) als Riemenkörper hergestellt, in welches in der Richtung der Kraftübertragung, d.h. in der Bewegungsrichtung, Zugträger wie z.B. Stahlseile oder textile Zugträger eingebettet sind. Der Riemen weist wenigstens eine profilierte Seite auf, welche bei der Anwendung mit wenigstens einer Antriebsscheibe oder Antriebsrolle und mit wenigstens einer Umlenkscheibe oder Umlenkrolle bzw. einer Abtriebsscheibe oder Abtriebsrolle in Kontakt steht. Hierdurch kann der Riemen angetrieben und gleichzeitig geführt werden. Die Profilierung kann je nach Anwendungsfall quer zur Bewegungsrichtung z.B. als Zähne oder in der Bewegungsrichtung z.B. als Keile bzw. als Keilrippen ausgebildet sein.

Um das Material des Riemenkörpers vor Abrieb und dergleichen zu schützen, ist es bekannt, wenigstens die profilierte Seite des Riemens mit einer Beschichtung zu versehen. Hierdurch kann z.B. ein Gewebe verwendet werden, welches mit einer seiner Seiten flächig auf der korrespondierenden Seite des Riemenkörpers aufgebracht wird.

Die Herstellung eines derartigen Riemens erfolgt üblicherweise derart, dass die Beschichtung als Laminat separat hergestellt und anschließend mit dem Riemenkörper verbunden wird. Das Gewebe wird in diesem Fall mit einer Folie zu einem Laminat doubliert. Anschließend wird das Laminat so vorgeformt, dass das Laminat die Kontur der Profilierung des Riemens annimmt. Die Folie wird dabei plastifiziert, verformt und durch Abkühlen wieder verfestigt. Hierdurch nimmt auch das Gewebe die vorgegebene Form der Profilierung an. Anschließend wird das vorgeformte Laminat in der Herstellung des Riemens so eingesetzt, dass die Folie die Außenseite der Profilierung des Riemens bildet.

Insbesondere bei Anwendungen von Riemen in Umgebungen mit hoher Explosionsgefahr ist es erforderlich, dass elektrostatische Aufladungen über den Riemen abgeleitet werden können. Es muss also eine elektrisch leitende Verbindung zwischen dem Riemen und mindestens einer geerdeten Riemenscheibe oder Rückenrolle vorhanden sein. Alternativ kann eine elektrostatische Aufladung auch über mit dem Riemen in Kontakt stehenden Schleifbürsten abgeleitet werden.

Aus dem Stand der Technik sind verschiedene Ausführungsformen leitfähiger und somit antistatischer Riemen bekannt.

Die US 2010/0197435 A1 offenbart einen Antriebsriemen mit einem Riemenkörper aus elastomerem Material und einer antistatischen und verschleißbeständigen Gewebebeschichtung. Die antistatischen Eigenschaften der Gewebebeschichtung werden durch elektrisch leitfähige Fasern erreicht. Die Beschichtung kann sowohl auf der Antriebsseite als auch auf der gegenüberliegenden Rückenseite des Riemens angeordnet sein. Ergänzend zu der leitfähigen Gewebebeschichtung kann auch das Elastomere Material des Riemens elektrisch leitfähig ausgebildet sein.

Nachteiligerweise eignet sich diese Ausführungsform eines antistatischen Gewebes nur für Riemen, die im Durchdrückverfahren hergestellt werden und nicht für die Anwendung bei im Gießverfahren hergestellten Riemen, da hierfür ein Vorformen des Gewebes mit einer zusätzlichen Folienpräparation erforderlich ist.

Die US 6,770,004 B1 offenbart ebenfalls einen elektrisch leitfähigen Antriebsriemen mit einer elektrisch leitfähigen Beschichtung aus thermoplastischem Polyethylen und einer benachbarten Gewebeschicht. Die elektrische Leitfähigkeit des Riemens ergibt sich in diesem Fall über eine elektrisch leitfähige Folienbeschichtung auf der Zahnseite des Riemens. Eine Ableitung von elektrostatischer Ladung kann nachteiliger Weise nur über die Bereiche erfolgen, die mit der leitfähigen Folienbeschichtung versehenen sind, was in diesem Fall der Antriebsseite des Zahnriemens entspricht. Eine zusätzliche Ableitung elektrostatischer Ladung über die Riemenrücken und mit diesem in Kontakt stehenden Rückenrollen ist aufgrund der elektrisch isolierenden Eigenschaften des Elastomeren Materials des Riemenkörpers nicht möglich. Eine elektrische Leitfähigkeit zwischen der Antriebsseite und der Rückenseite des Riemens ist mit der hier offenbarten Lösung nicht erreichbar.

US 2015/0285334 A1 offenbart einen Riemen mit einem elektrisch leitfähigen Zugstrang, einer Außenschicht aus elektrisch leitfähigem thermoplastischem Material und einem elektrisch leitfähigen Gewebe, welches zwischen der Außenschicht und dem Zugstrang angeordnet ist. Es wird somit eine Leitfähigkeit des Riemens zwischen der Riemenoberfläche und dem Zugstrang über das dazwischen liegende leitfähige Gewebe realisiert. Das Gewebe kann für eine bessere mechanische Anbindung zumindest teilweise durch das Elastomere Material, welches außerdem elektrisch leitfähig sein kann, gefüllt sein. Es erweist sich hierbei als nachteilig, dass für die elektrisch leitfähigen Eigenschaften des Gewebes eine Gewebepräparation erforderlich ist. Dies erfordert durch zusätzlich erforderliche Verfahrensschritte einen prozesstechnischen und somit auch einen finanziellen Mehraufwand in der Herstellung. Darüber hinaus kann die elektrisch leitfähige Gewebepräparation Substanzen enthalten, die eine mechanische Anbindung zwischen dem Elastomeren Material und dem Gewebe wiederum nachteilig beeinflussen.

### Aufgabe

Der Erfindung liegt die Aufgabe zugrunde, einen elektrisch leitfähigen Riemen mit verbesserten antistatischen Eigenschaften zur Übertragung hoher Leistungen bereitzustellen, wobei insbesondere die mechanischen Eigenschaften der Gewebebeschichtung nicht nachteilig beeinflusst werden sollen. Weiterhin soll der Riemen eine über seinen gesamten Querschnitt durchgängige elektrische Leitfähigkeit aufweisen, sodass elektrostatische Ladungen sowohl über den Riemenrücken als auch über die dem Riemenrücken gegenüber liegende Antriebsseite abgeleitet werden können.

### Lösung der Aufgabe

Die Lösung dieser Aufgabe ergibt sich durch einen Riemen mit den Merkmalen des Hauptanspruchs.

Weitere vorteilhafte Ausbildungen sind in den abhängigen Ansprüchen offenbart. Anspruch 10 offenbart zudem ein Verfahren zur Herstellung eines erfindungsgemäßen Riemens.

### Vorteile der Erfindung

Der in dem Anspruch 1 offenbarte erfindungsgemäße Riemen umfasst einen Riemenkörper mit einer Antriebsseite und einer der Antriebsseite gegenüberliegenden Rückenseite, wobei der Riemenkörper ein elektrisch leitfähiges polymeres Material aufweist. In dem Riemenkörper sind in einer Längsrichtung eine Mehrzahl von Zugträgern angeordnet und von dem polymeren Material des Riemenkörpers umschlossen, wobei der Riemen auf einer Antriebsseite eine Beschichtung aufweist, die einen festen Haftverbund mit dem Riemenkörper bildet. Die Beschichtung weist eine Folienschicht und eine zwischen dem Riemenkörper und der Folienschicht angeordnete Gewebeschicht auf, wobei die Gewebeschicht Freiräume aufweist. Die Gewebeschicht ist elektrisch isolierend ausgebildet, wobei die Gewebeschicht zumindest teilweise von dem elektrisch leitfähigen polymeren Material gefüllt ist, sodass der Riemen eine von der Antriebsseite zur Rückenseite des Riemens durchgängige elektrische Leitfähigkeit aufweist. Erfindungsgemäß weist die Folienschicht elektrisch leitfähige Ruße oder Kohlenstoffnanoröhren auf.

Bereits durch geringe Mengen elektrisch leitfähiger Ruße kann die Folienschicht eine elektrische Leitfähigkeit bei gleichzeitig guter mechanischer Beständigkeit erlangen. Typische mechanische Belastungen bei der Verwendung einer Folienschicht an Antriebsriemen sind wechselnde Zugbelastungen sowie Biegewechselbelastungen.

Durch die alternative Verwendung von Kohlenstoffnanoröhren kann im Vergleich zu elektrisch leitfähigen Rußen eine höhere elektrische Leitfähigkeit erzielt werden.

Mit anderen Worten gesagt betrifft die Erfindung einen elektrisch leitfähigen Antriebsriemen, bei dem die elektrische Leitfähigkeit über ein elektrisch leitfähiges Polymer realisiert werden kann. Es können Elastomere auf der Basis vulkanisierbarer Kautschukmischungen, umfassend wenigstens eine Kautschukkomponente (z.B. EPM, EPDM, HNBR, FKM) sowie Mischungsingredienzien, zum Einsatz kommen. Grundsätzlich können alle der fachkundigen Person bekannten Elastomere verwendet werden. In einer bevorzugten Ausführungsform ist das Elastomer ausgewählt aus der Gruppe bestehend aus Ethylen-Propylen-Mischpolymerisat (EPM) oder Ethylen-Propylen-Dien-Mischpolymerisat (EPDM) oder Nitrilkautschuk (NBR) oder (teil)hydrierter Nitrilkautschuk (HNBR) oder Fluor-Kautschuk (FKM) oder Chloropren-Kautschuk (CR) oder Naturkautschuk (NR) oder Styrol-Butadien-Kautschuk (SBR) oder Isopren-Kautschuk (IR) oder Butylkautschuk (IIR) oder Brombutylkautschuk (BIIR) oder Chlorbutylkautschuk (CIIR) oder Butadien-Kautschuk (BR) oder Chloriertes Polyethylen (CM) oder Chlorsulfoniertes Polyethylen (CSM) oder Polyepichlorhydrin (ECO) oder Ethylen-Vinylacetat-Kautschuk (EVA) oder Acrylat-Kautschuk (ACM) oder Ethylen-Acrylat-Kautschuk (AEM) oder Silikonkautschuk (MQ, VMQ, PVMQ, FVMQ) oder fluorierter Methylsilikonkautschuk (MFQ) oder perfluorinierter Propylen-Kautschuk (FFPM) oder Perfluorcarbon-Kautschuk (FFKM) oder Polyurethan (PU). Die genannten Kautschuke können hierbei alleine oder im Verschnitt, d.h. als Blend, eingesetzt werden.

Insbesondere bei Anwendungen von Riemen in explosionsgeschützter Umgebung ist eine antistatische Eigenschaft des Riemens von besonders großer Bedeutung. Durch Relativbewegungen zwischen dem Riemen und den durch den Riemen umschlungenen Riemenscheiben kann sich der Riemen elektrostatisch aufladen. Diese elektrostatische Aufladung kann über einen elektrisch leitfähigen Riemen und über mindestens eine im Wesentlichen metallische und ebenfalls leitfähige und mit der Antriebsseite des Riemens im Eingriff stehenden, geerdeten Riemenscheibe abgeleitet werden. Die Erdung der Riemenscheibe kann je nach Anwendung zum Beispiel über das Gestell einer Werkzeugmaschine oder die Karosserie eines Fahrzeugs erfolgen. Die Ableitung elektrostatischer Aufladung kann ebenfalls über eventuell vorhandene Rückenrollen erfolgen.

Zum Schutz des Riemens vor Verschleiß, sowie zur Optimierung der Reibeigenschaften und der Akustik, kann der Riemen mit einer Beschichtung versehen sein. Diese Beschichtung kann als ein Gewebe- und Folienverbund ausgeführt sein, wobei das Gewebe zwischen der Folie und dem Riemenkörper angeordnet ist. Das elektrisch leitfähige Polymer kann die Freiräume des nicht elektrisch leitfähigen Gewebes durchdringen, wodurch eine elektrisch leitfähige Verbindung zwischen der elektrisch leitfähigen Folienschicht und dem elektrisch leitfähigen Polymer hergestellt werden kann. Auf vorteilhafte Weise kann trotz eines nicht elektrisch leitfähigen Gewebes eine elektrische Leitfähigkeit des Riemens über den gesamten Querschnitt, d.h. von der Zahnseite bis zur gegenüberliegenden Rückenseite, realisiert werden. Das Gewebe kann durch den Verzicht auf eine elektrisch leitfähige Präparation bestmögliche mechanische Eigenschaften beibehalten. Da zur Erlangung antistatischer Eigenschaften des Riemens keine aufwendige Gewebepräparation erforderlich ist, können im Vergleich zu Riemen mit einem leitfähigen Gewebe die Kosten in der Herstellung gesenkt werden.

Eine weitere vorteilhafte Ausbildung des erfindungsgemäßen Riemens sieht vor, dass die Freiräume der Gewebeschicht zu mindestens 80% von dem polymeren Material gefüllt sind. Mit anderen Worten gesagt zeigt es sich für optimale antistatische Eigenschaften als besonders vorteilhaft, dass 80 % der Lücken des Gewebes mit dem polymeren Material gefüllt sind. Hierdurch kann auf besonders vorteilhafte Weise eine elektrische Leitfähigkeit des Riemens über den gesamten Querschnitt realisiert werden. So kann der elektrische Widerstand verringert und die Ableitung von elektrostatischen Ladungen über den Riemen verbessert werden.

Gemäß einem weiteren Aspekt der vorliegenden Erfindung weist das polymere Material des Riemenkörpers Polyurethan auf oder besteht vorzugsweise aus Polyurethan. Riemen aus Polyurethan zeichnen sich durch eine besonders hohe Leistungsfähigkeit aus und können im Vergleich zu Riemen aus Gummiwerkstoffen besonders verschleißbeständig sein. Das Polyurethan kann insbesondere als ein mehrkomponentiges, gießfähiges Reaktionsgemisch ausgebildet sein.

Gemäß einem weiteren Aspekt der vorliegenden Erfindung weist die Folienschicht Polyethylen auf, vorzugsweise besteht die Folienschicht aus Polyethylen. Hierdurch können die mechanisch vorteilhaften Eigenschaften des Polyethylens für einen erfindungsgemäßen Riemen verwendet werden.

Gemäß einem weiteren Aspekt der vorliegenden Erfindung weist das polymere Material Ruß mit einem Anteil von 1 bis 6 Gewichtsprozent auf. So kann eine gute elektrische Leitfähigkeit des polymeren Materials erzielt werden, ohne die mechanischen Eigenschaften negativ zu beeinflussen.

Gemäß einem weiteren Aspekt der vorliegenden Erfindung weist das polymere Material Ruß mit einem Anteil von 2,5 bis 3,5 Gewichtsprozent auf. Es zeigt sich auf besonders vorteilhafte Weise, dass hiermit eine ausreichend hohe elektrische Leitfähigkeit zur Ableitung elektrostatischer Ladungen erreicht werden kann, wobei gleichzeitig die Anforderungen an das polymere Material für einen Riemen mit besonders hoher Leistungsübertragung erfüllt werden können.

Gemäß einem weiteren Aspekt der vorliegenden Erfindung weist die Antriebsseite des Riemens eine Profilierung, vorzugsweise in der Querrichtung ausgerichtete Zähne, auf. Hierdurch kann ein mechanischer Kontakt zu einer Riemenscheibe über die Antriebsseite des Riemens verbessert werden, um höhere Kräfte in der Längsrichtung des Riemens übertragen zu können. Dies kann insbesondere durch in der Querrichtung ausgerichtete Zähne, also bei der Ausbildung des erfindungsgemäßen Riemens als Zahnriemen, besonders wirkungsvoll erfolgen.

Gemäß einem weiteren Aspekt der vorliegenden Erfindung sind die Zugträger elektrisch leitfähig ausgebildet. Hierdurch kann die Leitfähigkeit des Riemens besonders wirkungsvoll gesteigert werden.

Leitfähig ausgebildete Zugträger können gemäß einem weiteren Aspekt der vorliegenden Erfindung beispielsweise aus Stahl oder Kohlenstofffasern ausgebildet sein. Dies ist besonders vorteilhaft, da die Werkstoffe einerseits eine hohe elektrische Leitfähigkeit aufweisen und zudem äußerst hohen mechanischen Belastungen standhalten können. Aufgrund des hohen Elastizitätsmoduls können Zugträger aus Stahl oder Kohlenstofffasern dem Riemen eine besonders hohe Längssteifigkeit verleihen, wodurch ein Riemen besonders hohe Leistungen übertragen kann.

Eine weitere Ausführungsform der vorliegenden Erfindung sieht ein Verfahren zur Herstellung eines erfindungsgemäßen Riemens vor, wobei die Beschichtung in einem ersten Verfahrensschritt vorgeformt wird und der Riemen in einem zweiten Verfahrensschritt in einem Gießverfahren mit der Beschichtung verbunden wird. Mit anderen Worten gesagt wird die Beschichtung als Laminat, bestehend aus einem Gewebe und einer Folie separat hergestellt und anschließend mit dem Riemenkörper verbunden. Das Gewebe wird mit einer Folie zu einem Laminat doubliert. Anschließend wird das Laminat so vorgeformt, dass das Laminat die Kontur der Profilierung des Riemens annimmt. Die Folie wird dabei plastifiziert, verformt und durch Abkühlen wieder verfestigt. Hierdurch nimmt auch das Gewebe die vorgegebene Form der Profilierung an. Anschließend wird das vorgeformte Laminat in der Herstellung des Riemens so eingesetzt, dass die Folie die Außenseite der Profilierung des Riemens bildet.

### Erläuterung Figuren

Anhand der folgenden Figuren wird nachfolgend ein Ausführungsbeispiel der Erfindung näher erläutert.
- Fig. 1: zeigt einen schematischen Längsschnitt durch einen Riemen.
- Fig. 2: zeigt eine Detaildarstellung der Fig. 1
- Fig. 3: zeigt einen zweischichtigen Aufbau eines Riemens.

Die Beschreibung der o.g. Figuren erfolgt in kartesischen Koordinaten mit einer Längsrichtung X, einer zur Längsrichtung X senkrecht ausgerichteten nicht dargestellten Querrichtung sowie einer sowohl zur Längsrichtung X als auch zur Querrichtung senkrecht ausgerichteten vertikalen Richtung Z. Die Längsrichtung X kann auch als Tiefe X, die Querrichtung auch als Breite und die vertikale Richtung Z auch als Höhe Z bezeichnet werden.

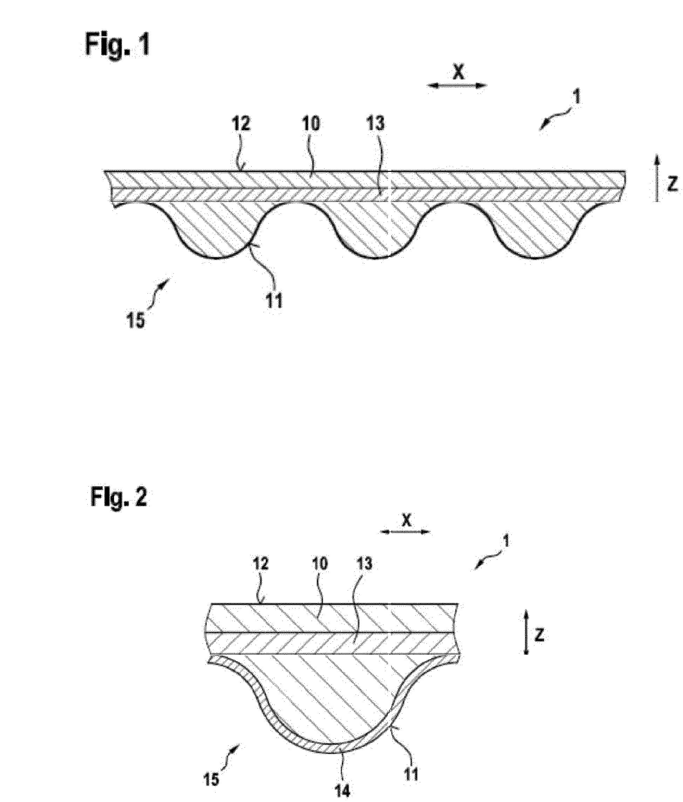

Fig. 1 zeigt einen schematischen Längsschnitt durch einen Riemen 1. Fig. 2 zeigt eine Detaildarstellung der Fig. 1.

Der Riemen 1 stellt einen allgemein bekannten Riemen 1 dar, welcher als Zahnriemen 1 ausgebildet ist. Der Zahnriemen 1 weist einen Riemenkörper 10 auf, welcher aus elektrisch leitfähigem Polyurethan (PU) besteht. Der Zahnriemen 1 weist eine erste Riemenseite 11 auf, welche als Antriebsseite 11 ausgebildet ist, mit Antriebsrollen, Führungsrollen und Umlenkrollen (nicht dargestellt) eines Antriebssystems zusammenzuwirken und Kräfte zu übertragen. Hierzu weist die Antriebsseite 11 eine Profilierung 15 in Form von Zähnen 15 auf. Der Antriebsseite 11 in der Höhe Z gegenüberliegend weist der Zahnriemen 1 eine zweite Riemenseite 12 auf. Innerhalb des Riemenkörpers 10 sind mehrere Zugträger 13 in Form von Stahlseilen 13 in der Längsrichtung X verlaufend angeordnet, welches aus einzelnen Stahllitzen gebildet wird. Die Stahlseile 13 dienen der Übertragung der Zugkräfte in der Längsrichtung X als Bewegungsrichtung des Zahnriemens 1.

Die äußere Oberfläche der Antriebsseite 11 des Zahnriemens 1 wird von einer Beschichtung 14 gebildet, welche separat als Laminat hergestellt und mit dem Profil 15 vorgeformt wird. Die laminierte und vorgeformte Beschichtung 14 wird zusammen mit den Stahlseilen 13 mit flüssigem Polyurethan vergossen und ausgehärtet, so dass sich eine stoffschlüssige Verbindung zwischen der laminierten Beschichtung 14 und dem Riemenkörper 10 ergibt und zu einem einstückigen Zahnriemen1 führt, siehe z.B. Fig. 2.

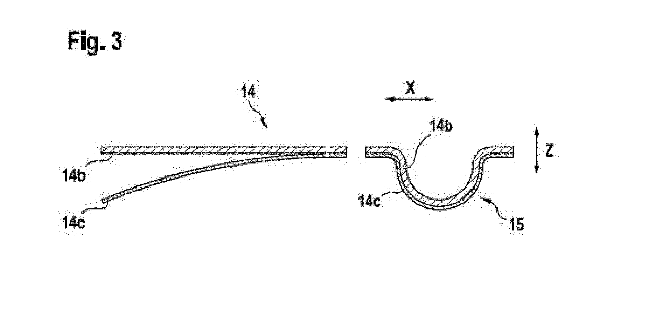

Fig. 3 zeigt einen zweischichtigen Aufbau eines Riemens 1, wie des zuvor beschriebenen Zahnriemens 1. Es werden eine Gewebeschicht 14b und eine Folie 14c als Außenfolie 14c verwendet, welche separat hergestellt und durch Übereinanderlegen zu einem zweischichtigen Aufbau zusammengeführt werden. Der zweischichtige Aufbau wird dann in die gewünschte Form, welche der Anordnung der Profilierung 15 entspricht, gebracht. Die Gewebeschicht 14b ist elektrisch isolierend ausgebildet. Die Folie 14c bildet die Oberfläche der Antriebsseite 11 des Riemens 1 und ist durch das Aufweisen von elektrisch leitfähigem Ruß oder Kohlenstoffnanoröhren, englisch Carbon Nanotubes, elektrisch leitfähig ausgebildet. Da die Gewebeschicht 14b ein Fasergeflecht mit dazwischenliegenden Freiräumen aufweist, füllt das Polyurethan des Riemenkörpers 10 die Freiräume der Gewebeschicht 14b aus, sodass eine elektrisch leitfähige Verbindung zwischen dem Riemenkörper 10 und der Folie 14c gebildet wird. Auf diese Weise erhält der Riemen 1 über seinen gesamten Querschnitt eine durchgängige elektrische Leitfähigkeit, sodass elektrostatische Ladungen sowohl über die erste Riemenseite 11 als auch über die zweite Riemenseite 12 abgeleitet werden können.

### Bezugszeichenliste

- X: Längsrichtung
- Y: Querrichtung; Breite
- Z: vertikale Richtung; Höhe

- 1: Riemen; Zahnriemen
- 10: Riemenkörper
- 11: erste Riemenseite; Antriebsseite
- 12: zweite Riemenseite; Rückenseite
- 13: Zugträger
- 14: Beschichtung
- 14b: Gewebeschicht
- 14c: Folienschicht
- 15: Profilierung bzw. Zähne der ersten Riemenseite 11

## Patentansprüche

1. Riemen (1) mit einer Antriebsseite (11) und einer der Antriebsseite (11) gegenüber liegenden Rückenseite (12),
umfassend einen Riemenkörper (10),
wobei der Riemenkörper (10) ein elektrisch leitfähiges polymeres Material aufweist,
wobei in dem Riemenkörper (10) in einer Längsrichtung (X) eine Mehrzahl von Zugträgern (13) angeordnet und von dem polymeren Material des Riemenkörpers (10) umschlossen ist,
wobei der Riemen (1) auf einer Antriebsseite (11) eine Beschichtung (14) aufweist, die einen festen Haftverbund mit dem Riemenkörper (10) bildet,
wobei die Beschichtung (14) eine elektrisch leitfähige Folienschicht (14c) und eine zwischen dem Riemenkörper (10) und der Folienschicht (14c) angeordnete Gewebeschicht (14b) aufweist, wobei die Gewebeschicht (14b) Freiräume aufweist, wobei die Gewebeschicht (14b) elektrisch isolierend ausgebildet ist,
die Gewebeschicht (14b) zumindest teilweise von dem elektrisch leitfähigen polymeren Material gefüllt ist, sodass der Riemen (1) eine von der Antriebsseite (11) zur Rückenseite (12) des Riemens (1) durchgängige elektrische Leitfähigkeit aufweist,
**dadurch gekennzeichnet, dass**
die Folienschicht (14c) elektrisch leitfähige Ruße aufweist
oder
die Folienschicht (14c) Kohlenstoffnanoröhren aufweist.

2. Riemen (1) nach Anspruch 1,
**dadurch gekennzeichnet, dass**
die Freiräume der Gewebeschicht (14b) zu mindestens 80% von dem polymeren Material gefüllt sind.

3. Riemen (1) nach einem der vorherigen Ansprüche,
**dadurch gekennzeichnet, dass**
das polymere Material des Riemenkörpers (10) Polyurethan aufweist, vorzugsweise aus Polyurethan besteht.

4. Riemen (1) nach einem der Ansprüche 1 bis 3,
**dadurch gekennzeichnet, dass**
die Folienschicht (14c) Polyethylen aufweist, vorzugsweise aus Polyethylen besteht.

5. Riemen (1) nach einem der vorhergehenden Ansprüche,
**dadurch gekennzeichnet, dass**
das polymere Material Ruß mit einem Anteil von 1 bis 6 Gewichtsprozent aufweist.

6. Riemen (1) nach einem der vorhergehenden Ansprüche,
**dadurch gekennzeichnet, dass**
das polymere Material Ruß mit einem Anteil von 2,5 bis 3,5 Gewichtsprozent aufweist.

7. Riemen (1) nach einem der vorherigen Ansprüche,
**dadurch gekennzeichnet, dass**
die Antriebsseite (11) des Riemens (1) eine Profilierung (15), vorzugsweise in der Querrichtung ausgerichtete Zähne, aufweist.

8. Riemen (1) nach einem der vorherigen Ansprüche,
**dadurch gekennzeichnet, dass**
die Zugträger (13) elektrisch leitfähig ausgebildet sind.

9. Riemen (1) nach einem der vorhergehenden Ansprüche,
**dadurch gekennzeichnet, dass**
die Zugträger (13) aus Stahl oder Kohlenstofffaser ausgebildet sind.

10. Verfahren zur Herstellung eines Riemens (1) nach einem der Ansprüche 1 bis 9,
**dadurch gekennzeichnet, dass**
die Beschichtung (14) in einem ersten Verfahrensschritt vorgeformt wird und der Riemen (1) in einem zweiten Verfahrensschritt in einem Gießverfahren mit der Beschichtung (14) verbunden wird.

## Claims

1. belt (1) with one drive side (11) and one back side (12) opposite the drive side (11),
comprising a belt body (10),
wherein the belt body (10) has an electrically conductive polymer material,
wherein in the belt body (10) a plurality of tension members (13) is arranged in a longitudinal direction (X) and enclosed by the polymer material of the belt body (10),
wherein the belt (1) has a coating (14) on one side of the drive (11) which forms a firm adhesive bond with the belt body (10),
wherein the coating (14) has an electrically conductive film layer (14c) and a fabric layer (14b) arranged between the belt body (10) and the film layer (14c), wherein the fabric layer (14b) has free spaces, wherein the fabric layer (14b) is electrically insulating,
the fabric layer (14b) is at least partially filled by the electrically conductive polymer material, so that the belt (1) has a continuous electrical conductivity from the drive side (11) to the back side (12) of the belt (1),
**characterized in that**
the film layer (14c) has electrically conductive carbon blacks, or
the film layer (14c) has carbon nanotubes.

2. Belt (1) according to claim 1,
**characterized by** the fact that
the free spaces of the tissue layer (14b) are at least 80% filled by the polymer material.

3. belt (1) according to any of the previous claims,
**characterized by** the fact that
the polymeric material of the belt body (10) has polyurethane, preferably consists of polyurethane.

4. Belt (1) according to any one of claims 1 to 3,
**characterized by** the fact that
the film layer (14c) has polyethylene, preferably consists of polyethylene.

5. a belt (1) according to any of the preceding claims,
**characterized by** the fact that
the polymer material has carbon black with a proportion of 1 to 6 percent by weight.

6. a belt (1) according to any of the preceding claims,
**characterized by** the fact that
the polymer material has carbon black with a proportion of 2.5 to 3.5 percent by weight.

7. belt (1) according to any of the previous claims,
**characterized by** the fact that
the drive side (11) of the belt (1) has a profile (15), preferably in the transverse direction.

8. belt (1) according to any of the previous claims,
**characterized by** the fact that
the tension members (13) are electrically conductive.

9. a belt (1) according to any of the preceding claims,
**characterized by** the fact that
the tension members (13) are made of steel or carbon fibre.

10. The method of producing a belt (1) according to any one of claims 1 to 9,
**characterized by** the fact that
the coating (14) is pre-formed in a first process step
and the belt (1) is connected to the coating (14) in a second process step in a casting process.

## Revendications

1. courroie (1) avec un côté entraînement (11) et un côté arrière (12) opposé au côté entraînement (11),
comprenant un corps de ceinture (10),
où le corps de la courroie (10) possède un polymère conducteur électrique,
où, dans le corps de la courroie (10), une pluralité d'éléments de tension (13) est disposée dans une direction longitudinale (X) et entourée par le matériau polymère du corps de la courroie (10),
où la courroie (1) possède un revêtement (14) d'un côté de la transmission (11) qui forme une liaison adhésive ferme avec le corps de la courroie (10),
où le revêtement (14) comporte une couche de film conductrice électrique (14c) et une couche de tissu (14b) disposées entre le corps de la courroie (10) et la couche de film (14c), où la couche de tissu (14b) a des espaces libres, où la couche de tissu (14b) est isolante électriquement,
La couche de tissu (14b) est au moins partiellement remplie par le polymère conducteur électrique, de sorte que la courroie (1) présente une conductivité électrique continue du côté entraînement (11) jusqu'à l'arrière (12) de la courroie (1),
**caractérisée par** ce
La couche de film (14C) contient des noirs de carbone conducteurs d'électricité, ou
la couche de film (14C) contient des nanotubes de carbone.

2. Ceinture (1) selon la revendication 1,
**caractérisée par le fait que**
Les espaces libres de la couche tissulaire (14B) sont remplis à au moins 80 % par le matériau polymère.

3. ceinture (1) selon l'une des revendications précédentes,
**caractérisée par le fait que**
Le matériau polymérique du corps de la ceinture (10) contient du polyuréthane, de préférence composé de polyuréthane.

4. Ceinture (1) selon l'une des revendications 1 à 3,
**caractérisée par le fait que**
La couche de film (14C) contient du polyéthylène, de préférence en polyéthylène.

5. une ceinture (1) selon l'une des revendications précédentes,
**caractérisée par le fait que**
Le matériau polymère contient du noir de carbone avec une proportion de 1 à 6 % en poids.

6. une ceinture (1) selon l'une des revendications précédentes,
**caractérisée par le fait que**
Le matériau polymère contient du noir de carbone avec une proportion de 2,5 à 3,5 % en poids.

7. ceinture (1) selon l'une des revendications précédentes,
**caractérisée par le fait que**
Le côté entraînement (11) de la courroie (1) a un profil (15), de préférence dans la direction transversale.

8. ceinture (1) selon l'une des revendications précédentes,
**caractérisée par le fait que**
Les éléments de tension (13) sont conducteurs électriquement.

9. une ceinture (1) selon l'une des revendications précédentes,
**caractérisée par le fait que**
Les éléments de tension (13) sont en acier ou en fibre de carbone.

10. La méthode de production d'une ceinture (1) selon l'une des revendications 1 à 9,
**caractérisée par le fait que**
Le revêtement (14) est préformé lors d'une première étape de procédé et la bande (1) est reliée au revêtement (14) lors d'une seconde étape du processus de coulée.
